# EUROPEAN PATENT APPLICATION

(11) **EP 1 475 340 A1**
(43) Date of publication of application: **10.11.2004**
(21) Application number: 04466006.6
(22) Date of filing: 11.03.2004
(51) Int. Cl.: B65H 54/74, H02K 1/27

(54) **Device for individual driving of rotary means for transport or winding a textile material in an operating unit of a textile machine**

(30) Priority: 11.03.2003 CZ 20030702
(71) Applicant: Rieter CZ a.s., 562 15 Usti nad Orlici (CZ)
(72) Inventor: Jiri, Stancl, Polni 1341 (CZ); Roman, Bilko, Nabrezna 34 (SK); Vitezslav, Kubes, Hnatnice 264 (CZ); Lukas, Starovesky, Bohdikov 63 (CZ)
(74) Representative: Musil, Dobroslav, Dipl.-Ing.

(57) **Abstract**

Device for individual driving of rotary means for transporting or winding a textile material in a textile machine operating unit comprising a plurality of operating units arranged side by side in a row. The rotary means for transporting the textile material consists of an electromotor (A) with a rotary jacket (1) and a stationary shaft (3) with the rotary jacket rotatably mounted on the stationary shaft.

## Description

### Technical field

The invention relates to a device for individual driving of rotary means for transport or winding a textile material in an operating unit of a textile machine comprising plurality of operating units arranged side by side.

### Background art

Through shafts with winding cylinders are used as a driving for bobbins of the whole machine or for a group of operating units. Such solution is inexpensive and easy from the constructional point of view but consists of many disadvantages revealing while boosting the machine parameters, in particular the speed of winding. The dominant disadvantage of the central solution is that an individual spin velocity regulation is impossible. The individual spin regulation improves considerably conditions for activation the operating unit after a rupture or a change of a bobbin, a controlled stopping and a precision winding structure with regard to a varying diameter of a bobbin while being wound. Also other rotary devices for transport or winding the textile material in the textile machine operating unit comprising plurality of operating units arranged side by side in most cases employ the through shaft drive.

For the purpose of individual control were developed devices for individual driving of rotary means for transport or winding the textile material in the textile machine operating unit comprising plurality of operating units arranged side by side comprising individual motor for each driven rotary mean which can for example be a winding device drive cylinder, a winding device bobbin being wound, a sliver feeding device drive cylinder, a opening roller etc.

There are known solutions where a standard electromotor connected via gear box or a mechanical coupling is assigned with the winding device drive cylinder. This solution is simple but implies many disadvantages. First of all a power loss in a gear box or a coupling must be taken into account and this solution calls for bearings in the motor (usually two) and further for two bearings for the winding device drive cylinder itself which is also described in US 2002/0011538A1 where the yarn winding device drive cylinder is mounted on a shaft which is in its part a shaft of an electromotor rotor assigned to an appropriate operating unit, respectively to a winding unit. Whereas textile machines operate in dust environment for long years, the lifetime of bearings in overall machine reliability is an important parameter. The fact is that the increased number of employed bearings increases the risk of a failure and therefore the mean time to failure is shorter.

In other solutions of the winding device bobbin drive the electromotors are mounted in one of spool arms among which a bobbin is situated, the electromotor rotor is connected to a spool disc by means of which drives the bobbin. In this embodiment a torque between the disc and the bobbin transmitting is a problem, e.g. starting the bobbin before winding-up the full bobbin when the bobbin weight is some kilograms. Such solutions are described in US 2002/0020779 A1 or US2002/0021101 A1 or in DE 199 08 093 A1 or DE 100 63 534 A1.

EP 10203836 A1 (CZ 2001-3847 A1) discloses a opening roller of a opening device of a rotor spinning machine where in the inner space of the opening roller is an electromotor situated whose coil winding stator is connected to a opening roller solid body mounted on the machine frame in the operating unit. There is a shaft rotary mounted inside of the stator where the shaft is fast connected to a bearing flange face and an outer cylinder forming a opening roller rotor. On the outer cylinder is a ring with a oppening clothing. The construction of the opening roller is complicated and the plurality of rotating parts increases the risk of lint suction into the inner space of the motor, rotating shaft and bearings and lowers the lifetime of the opening roller.

The goal of the invention intends to eliminate the above drawbacks of the art and to propose easier and more reliable individual driving of rotary means for transporting a textile material, in particular yarn, sliver and/or fibre in the operating unit of the machine, in particular spinning machines and winding machines.

### Principle of the invention

The goal of the invention has been reached by a device according to the invention whose principle consists in that a rotary device for transport of a textile material in a textile machine operating unit comprising plurality of operating units arranged side by side consists of an electromotor with a rotary jacket and a stationary shaft. In the most of possible applications this solution will increase the lifetime and reliability of the subjected device hence the reliability and productivity of the whole machine.

The electromotor with the rotary jacket can contain one, two or more motive power units mounted on a stationary shaft further described in Claim 2 and 3 while the number of motive power units depends on the moment to transmit to a rotary means, on the size of the means and respectively on other parameters of the means or the operating unit.

The arrangement of the stationary shaft and the rotary jacket according to Claim 4 and 5 depends on technological demands on the rotary means while the floating stationary shaft arrangement as claimed in Claim 5 is easier to mount onto a machine because it is positioned on one side only while through stationary shaft arrangement according to Claim 4 positioned on both sides of the rotary jacket is very compact and stable and does not need big corrections of the winding devices construction, e.g. in rotor spinning machines or winding machines.

The rotary jacket can be in both above mentioned embodiments mounted on the stationary shaft by means of at least two bearings which in its turn are preferably positioned on the stationary shaft.

In some cases the rotary jacket can be on the stationary shaft mounted by means of one bearing, e.g. in the case of sliver feeding device drive cylinder or the yarn draw-off device drive cylinder etc.

The arrangement according to Claim 6 and 7 enables the rotation of particular parts of the rotary jacket in a different speed.

The connection of several motive power units in one assembly as claimed in Claim 8 enables easy control and supply of each device all over the machine.

Device rotary jacket construction contributes to device dimensions minimization and enables to construct a rotary jacket made of a light metal or a plastic material and hence lowers the price of the device which is in its turn installed in each operating unit of the textile machine.

In particular cases when the rotary jacket is made of low wear resistance material it is preferred to fit the surface of the rotary jacket with a wear protective coat while the coat is preferred to have defined friction characteristics, i.e. surface roughness corresponding to the device maximal torque that should be transmitted to a driven mean.

In all above mentioned embodiments it is preferred if the stationary shaft is hollow and possible to embed supply and control line in it.

The rotary mean for a textile material transport is a winding device bobbin drive cylinder and/or the yarn draw-off device drive cylinder and/or the sliver feeding device drive cylinder and a opening roller of a spinning unit opening device.

The principle of the invention consists in that the winding device bobbin drive cylinder of the textile machine bobbin and/or yarn draw-off device drive cylinder of the textile machine and/or the sliver feeding device drive cylinder of the textile machine and/or the opening roller of the opening device of the rotor spinning machine or another textile machine is constructed from the rotary jacket electromotor.

### Description of the drawing

Examples of device embodiment according to the invention are schematically shown in the enclosed drawings where Fig. 1 is a winding device bobbin drive cylinder of a textile machine in one motive power unit arrangement with a stationary shaft passing through both rotary jacket faces and through two bearings in the vicinity of the rotary jacket faces, Fig. 2 is the winding device bobbin drive cylinder of the textile machine in two motive power units arrangement with the stationary shaft passing through both rotary jacket faces and through two bearings in the vicinity of the rotary jacket faces, Fig. 3 is the winding device bobbin drive cylinder of the textile machine in two motive power units arrangement with the stationary shaft passing through one rotary jacket face and Fig. 4 is a principle of control the drive cylinder motor.

### Examples of embodiments of invention

Device according to the invention is described in examples of embodiments of winding device drive cylinder for driving a bobbin which in its winding position bears on the drive cylinder surface and therefore is subject to drive. Such a winding device can be used to winding a yarn in each operating unit of a textile machine comprising plurality of operating units arranged side by side, e.g. in open-end spinning machines, in particular rotor spinning machines, winding machines or double twisting frames.

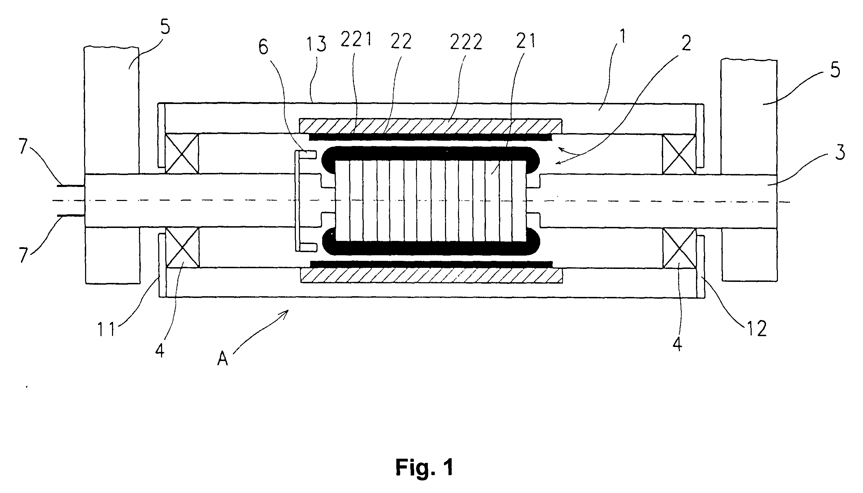

The drive cylinder consists of a rotary jacket **1** of electromotor. The rotary jacket **1** of electromotor comprises in the embodiment shown in Fig. 1 a motive power unit **2** whose stator **21** is mounted on the stationary shaft **3** and a rotor **22** is positioned inside of the rotary jacket **1.** The rotary jacket **1** is mounted on the stationary shaft **3** by means of two bearings **4** while the stationary shaft **3** is positioned in auxiliary arms **5** mounted in a well-known not represented manner on the frame of the machine. The stationary shaft **3** passes through both faces **11, 12** of rotary jacket **1** and the bearings are mounted in the ends of rotary jacket **1** in vicinity of its faces **11, 12.** Inside of the rotary jacket **1** are mounted sensors **6** of position and/or spin velocity of the rotor **22** of the motive power unit **2.** The stationary shaft **3** is hollow and in its cavity are placed supply lines **7** consisting of stator **21** winding supply cables and of inputs and outputs of sensors **6** position and/or spin velocity of the rotor **22** of the motive power unit **2**

The rotor **22** of the motive power unit **2** comprise permanent magnets uniformly arranged along the inside surface periphery of the rotary jacket **1** which can be mounted directly on the rotary jacket **1** if it is made of a ferromagnetic material or, as it is the case of the shown embodiment, the permanent magnets **221** are mounted on the inside surface of an auxiliary ring **222** made of a ferromagnetic material while the auxiliary ring **222** is mounted inside of the rotary jacket **1** which is in its turn made of light nonmagnetic material, for instance aluminium, duralumin or a plastic material and its surface is fitted with a wear protective coat **13**, for instance by means of plasma spraying or is fitted with some other hard material with suitable friction coefficient to provide the torque transmitting from the rotary jacket **1** to the driven bobbin while winding.

The sensors **6** of position and/or spin velocity of the rotor **22** of the motive power unit **2**, or respectively of the rotary jacket **1,** consist of suitable sensors in regard of the device construction of the whole machine. According to the present knowledge the most suitable sensors are Hall probes, optical sensors or electromagnetic sensors (resolvers).

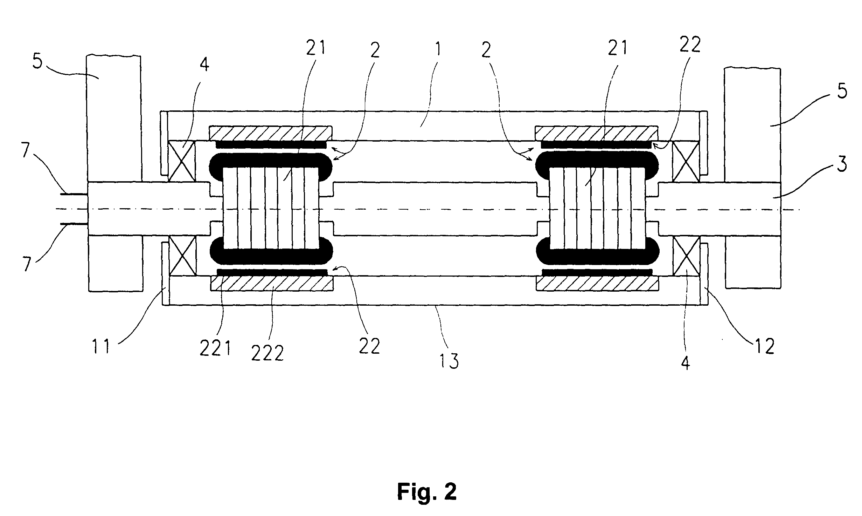

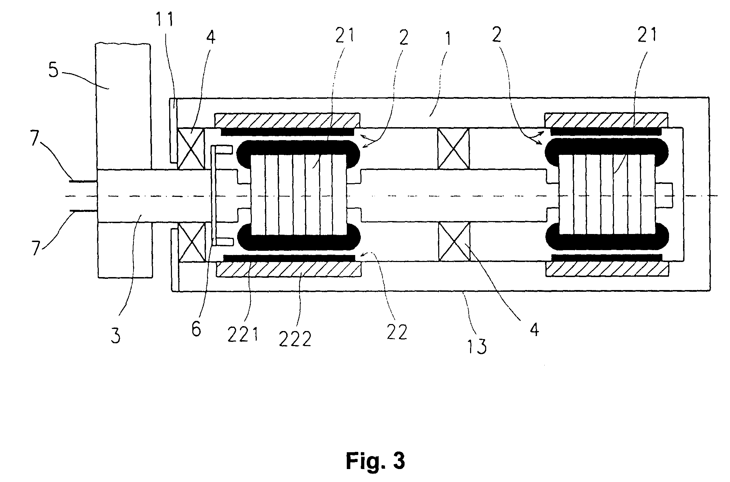

From the view of good winding structure of the bobbin winding in high winding speeds employed in present textile machines, the optimal diameter of the bobbin drive cylinder, that is the outer diameter of the rotary jacket **1** of the electromotor, is around 40 mm. For the build of approximately 150 to 180 mm commonly used in the textile industry is the electromotor diameter/length ratio approximately 1 : 4 to 1 : 6. This is in terms of electromotor construction disadvantageous because the electromotor must while starting the operating unit accelerate the bobbin which weighs up to 6 kg as fast as possible, i.e. in 1 to 2 seconds. The starting torque requirements are very high. The invention solves this problem by that the rotary jacket **1** of electromotor consists of plurality of motive power units **2** whose stators **21** are mounted on the stationary shaft **3** inside of the rotary jacket **1**. In the embodiment shown in the Fig. 2 and 3 the electromotor comprises two motive power units **2**. Both motive power units **2** or respectively each motive power units are positioned in one rotary jacket **1** are connected in series or parallel into one unit in terms of control system and supply.

The electromotor shown in Fig. 2 is also as the foregoing embodiment constructed as the drive cylinder of yarn winding device for the textile machine and consists of the rotary jacket **1** which is by means of roller bearings **4** positioned on the stationary shaft **3** while the stationary shaft **3** passes through both faces **11**, **12** of the rotary jacket **1** and the bearings are mounted in the ends of rotary jacket **1** in vicinity of its faces **11, 12.** Each motive power unit **2** as in the foregoing embodiment consists of the rotor **22** made of permanent magnets **221** mounted in the auxiliary ring **222** made of a ferromagnetic material while the rotary jacket **1** is made of light nonmagnetic material, i.e. aluminium, a plastic material, etc. and its surface is fitted with a wear protective coat. In this embodiment can be employed plurality of motive power units **2** while a plurality of bearings **4** for mounting the rotary jacket **1** onto the stationary shaft can be used.

In the embodiment shown in Fig. 3 is again shown the drive cylinder of the winding device consisting of rotary jacket **1** of electromotor which in its turn by means of bearings **4** mounted on the stationary shaft **3** which in this embodiment passes through only one face **11** of the rotary jacket **1** while the second face **12** is solid. The rotary jacket **1** in this embodiment is mounted on the stationary shaft **3** by means of the two bearings **4** where one of which is positioned in vicinity of the face **11** which the stationary shaft **3** placed for this purpose inside of the auxiliary arm **5** passes through. The second bearing **4** is mounted between the motive power units **2**.

The motive power unit consists of a DC motor with electronic commutation or a synchronous motor or a step motor.

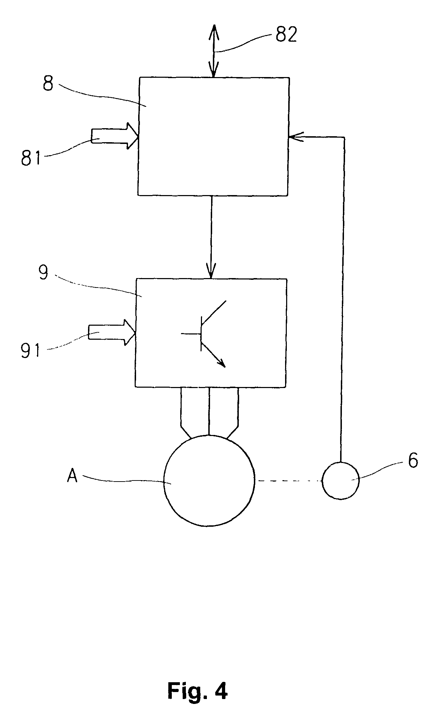

As it is shown in Fig. 4, the rotary jacket electromotor **A** is coupled with the control unit **8** consisting as a rule of microprocessor unit and a power unit **9**. The control unit **8** is coupled with a control unit supply **81** and the power unit **9** is coupled with power unit supply **91.** The position and/or speed sensor **6** of the motive power unit **2** or of the rotary jacket **1** of the electromotor **A** is connected to the control unit **8.** The control unit **8** is by means of communication bus **82** connected to a not represented superior control system of the machine operating unit and/or machine compartment and/or the whole machine. The control unit **8** commands upon the sensor/sensors **6** signal evaluation and/or upon the superior control unit signals where the commands are by means of power unit **9** transmitted into the electromotor **A**. By this arrangement it is possible to control separately each electromotor upon the sensor or sensors **6** signal and also obey the superior control system commands. The control unit **8** and also the power unit **9** can be positioned separately or they can be integrated in the electromotor **A** and positioned in his rotary jacket **1.**

In textile machines comprising plurality of operating units arranged side by side in a row can be used the device according to the invention for individual driving of suitable rotary means for transport or winding a textile material in the textile machine operating unit and the specific rotary means for transport or winding the textile material can consist of the rotary jacket electromotor and the stationary shaft. The suitable rotary means is not only the yarn winding device bobbin drive cylinder but for instance also the yarn draw-off device drive cylinder, the sliver feeding device drive cylinder or the opening roller of the opening device of the open-end, in particular rotor spinning machine. The specific embodiments can vary, depends on the application, while the basic features of the device do not change.

For instance for the yarn draw-off device drive cylinder and the sliver feeding device drive cylinder seems to be the best embodiment shown in the Fig. 3 while in consideration of a small diameter of these drive cylinders there can be used only one bearing for mounting the rotary jacket onto the stationary shaft.

In other not represented embodiment the rotary jacket electromotor can contain at least two motive power units arranged side by side on one shared stationary shaft and a segmented rotary jacket, while it seems to be advantageous if the segmented rotary jacket is divided in the same number of parts as is the number of motive power units mounted inside of the rotary jacket on the shared stationary shaft.

The subject matter of the invention also are rotary means for a textile material transport consisting of the rotary jacket electromotor. According to the invention the rotary means for the textile transport are considered in particular winding device bobbin drive cylinder of the textile machine comprising plurality of operating units arranged side by side. These rotary means can by produced and distributed separately as spare parts to textile machine users on which are devices according to the invention employed. The invention inter alia relates to the winding device bobbin drive cylinder of the textile machine which in its part consists of rotary jacket electromotor or to the yarn draw-off device drive cylinder of the textile machine which in its part consists of rotary jacket electromotor or to the sliver feeding device drive cylinder of the textile machine which in its part consists of rotary jacket electromotor or to the opening roller of the opening device of the open-end, in particular rotor spinning machine, etc.

## Claims

1. Device for individual driving of rotary means for transport or winding a textile material in a textile machine operating unit comprising plurality of operating units arranged side by side in a row, **characterized by** that the rotary means for transport the textile material consists of an electromotor (A) with a rotary jacket (1) and a stationary shaft (3) whereas rotary jacket is rotatable mounted on the stationary shaft.

2. Device as claimed in Claim 1, **characterized by** that the electromotor (A) with the rotary jacket (1) consists of a motive power unit (2) whose stator is mounted on the stationary shaft (3) inside of the rotary jacket (1).

3. Device as claimed in Claim 1, **characterized by** that the electromotor (A) with the rotary jacket (1) consists of at least two motive power units (2) arranged side by side on one shared stationary shaft (3) positioned inside of one shared rotary jacket (1).

4. Device as claimed in any of Claims 1 to 3, **characterized by** that the stationary shaft (3) passes through both faces (11, 12) of rotary jacket (1) and is by both his ends mounted in the machine operating unit.

5. Device as claimed in any of Claims 1 to 3, **characterized by** that the stationary shaft (3) passes by one of its ends through one face (11) of rotary jacket (1) and this end is mounted in the machine operating unit while the second rotary jacket (1) face (12) is solid.

6. Device as claimed in Claim 1, **characterized by** that the electromotor (A) with the rotary jacket (1) consists of at least two motive power units (2) arranged side by side on one shared stationary shaft (3) and a segmented rotary jacket (1).

7. Device as claimed in Claim 6, **characterized by** that the segmented rotary jacket (1) is divided in the same number of parts as is the number of motive power units (2) mounted on the shared stationary shaft (3).

8. Device as claimed in Claim 3 to 7, **characterized by** that two and more motive power units (2) positioned in one rotary jacket (1) are connected in series and/or in parallel forming one unit in terms of control system and supply.

9. Device as claimed in any of previous Claims, **characterized by** that the stationary shaft (3) is hollow.

10. Device as claimed in Claim 9, **characterized by** that in the cavity of the stationary shaft (3) are embedded lines (7) to supply and control all components positioned in the rotary jacket (1).
